# EUROPEAN PATENT SPECIFICATION

(11) **EP 3 785 843 B1**
(45) Date of publication and mention of the grant of the patent: **04.01.2023**
(21) Application number: 20183786.1
(22) Date of filing: 02.07.2020
(51) Int. Cl.: B23K 26/346, B23K 26/352, B23K 26/073, B23K 26/082, B23K 26/244, B23K 26/348

(54) **LASER-ARC HYBRID WELDING APPARATUS**
VORRICHTUNG ZUM HYBRIDEN LASERLICHTBOGENSCHWEISSEN
APPAREIL DE SOUDAGE HYBRIDE AU LASER À L'ARC

(30) Priority: 10.07.2019 JP 2019128190
(43) Date of publication of application: 03.03.2021
(73) Proprietor: DAIHEN Corporation, Osaka-shi, Osaka 532-8512 (JP)
(72) Inventor: LIU, Zhongjie, Osaka-shi, Osaka 532-8512 (JP); ERA, Tetsuo, Osaka-shi, Osaka 532-8512 (JP)
(74) Representative: Zacco GmbH

(56) References cited:
- EP-A1- 2 008 754
- DE-A1-102016 116 124
- DE-U1-202011 100 178
- JP-A- 2005 040 806

## Description

### BACKGROUND OF THE INVENTION

### Field of the Invention

The present disclosure relates to a laser-arc hybrid welding apparatus that uses laser and arc.

### Description of the Background Art

Japanese Patent Laying-Open No. 2005-40806 discloses a laser irradiation arc welding method of welding a welded joint while an arc generation portion is irradiated with laser, the welded joint including a gap in a joint portion and including a galvanized steel sheet as at least one of welded materials. In this welding method, a laser emitter is set to be defocused. By thus removing a zinc coating over a wide area and preventing introduction of zinc gas into a molten weld pool, generation of a blow hole and a pit is suppressed and the entire gap is sufficiently filled with a molten metal.

When a quantity of heat input to a joined portion is large, a temperature of the molten weld pool (a melt temperature) generated during welding becomes high and a depth of the molten weld pool (a penetration depth) also becomes large. Therefore, a rate of solidification of the molten weld pool is lowered, and consequently an amount of an intermetallic compound (for example, an alloy of aluminum and iron generated during welding between an aluminum sheet and a steel sheet) generated by welding increases. Since the intermetallic compound is more brittle than a parent material itself, joint strength is lowered with increase in amount of generated intermetallic compound. The "quantity of heat input" in the present disclosure refers to a total quantity of heat input (J) until end of welding at one point or in one region. In other words, the "quantity of heat input" in the present disclosure does not refer to magnitude (W) of heat input at one time point but takes into account also a time period of heat input.

Laser is normally adjusted to be focused in an irradiated region in order to maximize an irradiation energy density in the irradiated region. In this case, however, a quantity of heat input to a joined portion becomes large, which may lead to the problem above. When the quantity of heat input decreases, on the other hand, an area of joint between a weld bead and a parent material decreases, which may result in lowering in joint strength. Lowering in joint strength due to decrease in area of joint can be overcome by increasing a width of the weld bead.

The welding technique described in Japanese Patent Laying-Open No. 2005-40806 can suppress the quantity of heat input to the joined portion because laser is defocused. Simply by defocusing laser, however, a distribution of the quantity of heat input in a width direction with respect to a direction of progress of welding is such that the quantity of heat input is maximum in the central portion and decreases toward an end, because a two-dimensional shape of a laser irradiated region is normally annular. Therefore, at a portion distant from the central portion (for example, an end in the width direction), the quantity of heat input is insufficient and joint strength may be insufficient.
DE 10 2016 116 124 A1 discloses a welding apparatus in accordance with the preamble of claim 1.

### SUMMARY OF THE INVENTION

The present disclosure was made to solve such a problem, and an object of the present disclosure is to provide a laser-arc hybrid welding apparatus capable of securing joint strength by forming a weld bead of a large width while a quantity of heat input to a joined portion is suppressed.

A laser-arc hybrid welding apparatus according to the present disclosure uses laser and arc, and includes a laser torch that emits laser toward a joined portion and a welding torch that generates arc between the welding torch and the joined portion. The laser torch includes an adjustment mechanism that adjusts a shape of an irradiated region irradiated with laser. The adjustment mechanism enlarges the irradiated region in a direction of width of welding as compared with irradiation without the adjustment mechanism in the laser torch and adjusts a shape of the irradiated region to allow a distribution of a quantity of heat input by laser in the width direction to exhibit a prescribed profile. The prescribed profile refers to such a profile that the quantity of heat input in a central portion in the width direction is equal to or smaller than the quantity of heat input at an end in the width direction.

In this welding apparatus, the adjustment mechanism is provided so that the laser irradiated region is enlarged in the direction of width of welding and the quantity of heat input in the central portion in the width direction is suppressed. Therefore, according to the welding apparatus, a weld bead of a large width can be formed while the quantity of heat input to the joined portion is suppressed. Consequently, joint strength can be secured.

The adjustment mechanism may adjust the shape of the irradiated region to a rectangular shape including opposing sides in parallel to a direction of movement of the laser torch.

According to the welding apparatus, with a simplified configuration, the quantity of heat input at the end in the width direction can be increased while the quantity of heat input in the central portion in the width direction is suppressed.

The adjustment mechanism may further adjust a distribution of a laser irradiation energy density in the irradiated region to set the irradiation energy density in the central portion in the width direction to be lower than the irradiation energy density at the end in the width direction.

According to such a configuration, the quantity of heat input in the central portion in the width direction is smaller than the quantity of heat input at the end in the width direction. Therefore, the quantity of heat input in the width direction after arc welding can be leveled and a weld bead high in quality can be formed.

The adjustment mechanism may adjust the shape of the irradiated region to set a length of the irradiated region along a direction of movement of the laser torch in the central portion in the width direction to be shorter than a length of the irradiated region along the direction of movement at the end in the width direction.

According to such a configuration as well, the quantity of heat input in the central portion in the width direction can be smaller than the quantity of heat input at the end in the width direction. Therefore, the quantity of heat input in the width direction after arc welding can be leveled and a weld bead high in quality can be formed.

A distribution in the width direction, of a sum of the quantity of heat input by laser and a quantity of heat input by arc may exhibit a prescribed heat distribution.

Thus, a desired heat distribution in the width direction with the quantity of heat input by laser and the quantity of heat input by arc being combined can be formed and a weld bead high in quality can be formed.

The welding apparatus may further include a controller that adjusts output from the welding torch. At least one of adjustment of the shape of the irradiated region by the adjustment mechanism and adjustment of the output from the welding torch by the controller may be made to allow the distribution in the width direction of the sum of the quantity of heat input by laser and the quantity of heat input by arc to exhibit the prescribed heat distribution.

Mechanical characteristics of a welded portion are determined by a quantity of heat input to the welded portion and a heat distribution in each welding process. According to the welding apparatus, by adjusting the sum of the quantity of heat input by laser and the quantity of heat input by arc, desired mechanical characteristics in the welded portion can be obtained. In particular in welding in dissimilar material joining, in controlling an amount of generation and a distribution of an intermetallic compound, an amount and a distribution of a molten metal should be controlled. According to the welding apparatus, the profile of the quantity of heat input by laser is adjusted by using the adjustment mechanism, so that melting mainly of a parent material can be adjusted and a width of a weld bead as well as a depth (a penetration depth) and a distribution of a molten weld pool can be adjusted. By adjusting output from the welding torch by means of the controller, melting mainly of a weld wire can be adjusted and an amount of a molten metal can be adjusted.

The prescribed profile may refer to such a profile that the quantity of heat input in the central portion in the width direction is smaller than the quantity of heat input at the end in the width direction. The prescribed heat distribution may be uniform in the width direction.

According to the welding apparatus, a weld bead high in quality without concentration of a generated intermetallic compound in a part can be formed.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing an overall configuration of a laser-arc hybrid welding apparatus according to a first embodiment of the present disclosure.
Fig. 2 is a diagram schematically showing a configuration of a laser torch.
Fig. 3 is a diagram showing an exemplary two-dimensional shape of a laser irradiated region.
Figs. 4A to 4C each show a distribution of a quantity of heat input in a direction of width of welding.
Fig. 5 is a diagram showing an exemplary cross-section of a joined portion in fillet welding of a lap joint.
Fig. 6 is a diagram schematically showing a configuration of a laser torch in a second embodiment.
Fig. 7 is a diagram showing an exemplary two-dimensional shape of a laser irradiated region.

### DESCRIPTION OF THE PREFERRED EMBODIMENTS

An embodiment of the present disclosure will be described below in detail with reference to the drawings. The same or corresponding elements in the drawings have the same reference characters allotted and description thereof will not be repeated.

### [First Embodiment]

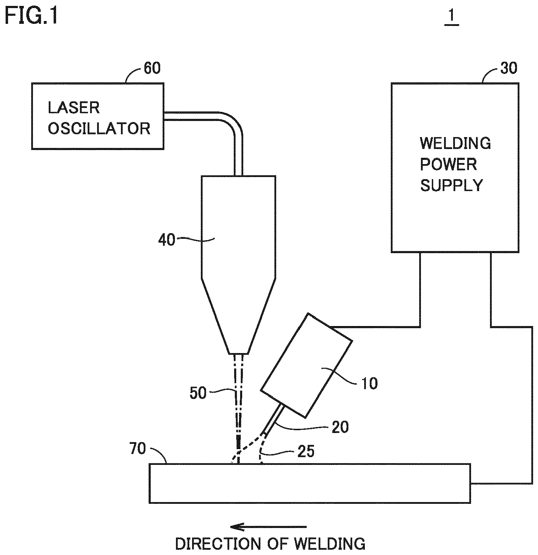

Fig. 1 is a diagram showing an overall configuration of a laser-arc hybrid welding apparatus according to a first embodiment of the present disclosure. Referring to Fig. 1, a laser-arc hybrid welding apparatus 1 includes a welding torch 10, a weld wire 20, a welding power supply 30, a laser torch 40, and a laser oscillator 60.

Laser-arc hybrid welding apparatus 1 is used for joining metals to each other, and can be used particularly for welding in dissimilar material joining. For example, laser-arc hybrid welding apparatus 1 can be used for welding between an aluminum alloy sheet and a hot-dip galvanized steel sheet such as a GI material or a GA material. Not only soft aluminum but also hard aluminum such as aluminum No. 5000 series (for example, 5052), No. 6000 series (for example, 6063), or No. 7000 series (for example, 7075) defined under JIS can be adopted for the aluminum alloy sheet. With the use of laser-arc hybrid welding apparatus 1, one and the other of welded materials 70 can be joined to each other, for example, by lap fillet welded joint or flare welded joint.

Welding torch 10 and welding power supply 30 are equipment for arc welding. Welding torch 10 supplies weld wire 20 and not-shown shield gas toward a portion of welded material 70 to be joined. By receiving supply of a welding current from welding power supply 30, welding torch 10 generates arc 25 between a tip end of weld wire 20 and the portion of welded material 70 to be joined and supplies shield gas (argon gas or carbon dioxide) toward a welded portion. Instead of weld wire 20, an electrode of a non-consumable material (tungsten or the like) may be employed. Arc welding with the use of welding torch 10 may be metal arc welding (MAG welding or MIG welding) or non-metal arc welding (TIG welding).

Welding power supply 30 generates a welding voltage and a welding current for arc welding and outputs the generated welding voltage and welding current to welding torch 10. Welding power supply 30 controls also a feed rate of weld wire 20 in welding torch 10.

Laser torch 40 and laser oscillator 60 are equipment for laser welding. Laser torch 40 receives supply of laser beams from laser oscillator 60 and emits laser toward the portion of welded material 70 to be joined.

In laser-arc hybrid welding apparatus 1 according to the present disclosure, laser torch 40 includes an adjustment mechanism that adjusts a shape of an irradiated region irradiated with laser and a distribution of a laser irradiation energy density in the irradiated region. The adjustment mechanism enlarges the irradiated region in a direction of width of welding as compared with irradiation without the adjustment mechanism. The adjustment mechanism adjusts the shape of the irradiated region and the distribution of the irradiation energy density such that the distribution in the direction of width of welding, of the quantity of heat input (J) by laser exhibits such a profile that the quantity of heat input in the central portion in the width direction is smaller than the quantity of heat input at an end in the width direction. In the present first embodiment, a diffractive optical element (DOE) is provided in laser torch 40 as such an adjustment mechanism. The configuration of laser torch 40 will be described later.

By providing such an adjustment mechanism in laser torch 40, a weld bead of a large width can be formed and joint strength can be secured while the quantity of heat input to the joined portion is suppressed, which will be described in detail below.

As described above, when the quantity of heat input (J) to the joined portion is large, a rate of solidification of a molten weld pool is lowered, which leads to increase in amount of an intermetallic compound generated by welding. For example, in welding between an aluminum alloy sheet and a galvanized steel sheet, an intermetallic compound which is an alloy between aluminum and iron (FeAl, Fe₃Al, Fe₂Al₅, or FeAl₃) is generated in a joined portion by welding, and an amount of generation thereof increases with increase in quantity of heat input to the joined portion. Since such an intermetallic compound is more brittle than a parent material, joint strength is lowered with increase in amount of generated intermetallic compound.

In order to effectively melt a member by increasing an irradiation energy density in an irradiated region, laser is normally adjusted to be focused in the irradiated region. In this case, however, the quantity of heat input to the joined portion increases, which may lead to increase in amount of generated intermetallic compound as described above. Then, joint strength may be lowered.

In order to suppress the amount of generated intermetallic compound, the quantity of heat input may be suppressed. When the quantity of heat input is suppressed, however, an area of joint between a weld bead and a parent material decreases, which may result in lowering in joint strength. Lowering in joint strength due to decrease in area of joint can be overcome by increasing a width of a weld bead.

In order to suppress the quantity of heat input, laser may be defocused. Simply by defocusing laser, however, a distribution of the quantity of heat input in the direction of width of welding is such that the quantity of heat input is maximum in a central portion and decreases toward an end because the two-dimensional shape of the laser irradiated region is normally annular. Therefore, in a portion distant from the central portion (for example, an end in the width direction), the quantity of heat input may be insufficient and joint strength may be insufficient.

In laser-arc hybrid welding apparatus 1 according to the present first embodiment, the DOE as the adjustment mechanism described above is provided in laser torch 40. By providing such an adjustment mechanism (DOE), a weld bead of a large width can be formed while the quantity of heat input to the joined portion is suppressed. Consequently, joint strength in the joined portion can be secured.

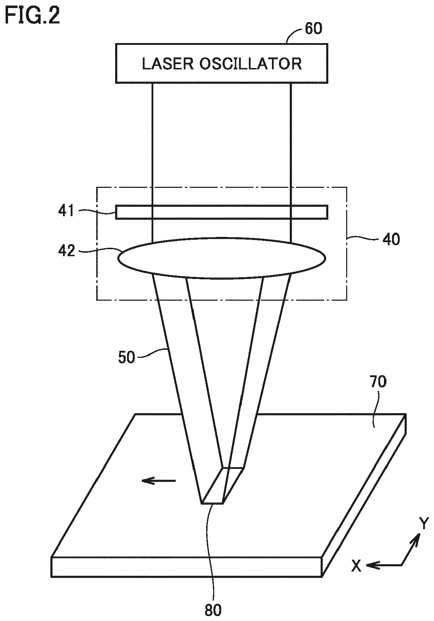

Fig. 2 is a diagram schematically showing a configuration of laser torch 40. Referring to Fig. 2, laser torch 40 includes a DOE 41 and a lens 42. Laser beams output from laser oscillator 60 are emitted to welded material 70 through DOE 41 and lens 42 so that an irradiated region 80 is formed in welded material 70.

DOE 41 processes laser beams received from laser oscillator 60 into a desired beam pattern based on a diffraction phenomenon. Specifically, DOE 41 geometrically disperses incident light received from laser oscillator 60 and shapes emitted laser such that irradiated region 80 on welded material 70 is increased in width as compared with irradiation without DOE 41 and is in a substantially rectangular shape.

Lens 42 condenses laser beams processed by DOE 41 and outputs condensed laser beams toward welded material 70.

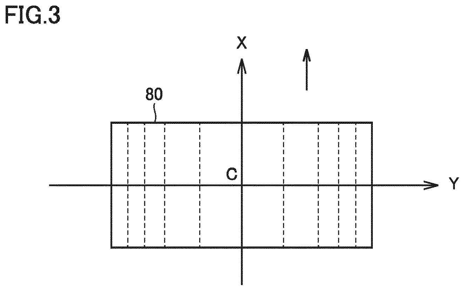

Fig. 3 is a diagram showing an exemplary two-dimensional shape of irradiated region 80. In Fig. 3, a direction of an X axis represents a direction of movement of laser torch 40 and a direction of a Y axis represents a direction of width of welding. Referring to Fig. 3, DOE 41 processes laser beams such that irradiated region 80 is in a substantially rectangular shape.

A group of dotted lines represent a distribution of a laser irradiation energy density. As illustrated, in irradiated region 80, DOE 41 shapes laser such that the irradiation energy density is higher from center C in the width direction (the direction of the Y axis) toward an end in the width direction.

Though irradiated region 80 includes opposing sides in parallel to the direction of movement (the direction of the X axis) of laser torch 40 as short sides and includes opposing sides in parallel to the width direction (the direction of the Y axis) as long sides in this example, irradiated region 80 may be in a substantially square shape or include opposing sides in parallel to the direction of movement (the direction of the X axis) of laser torch 40 as long sides.

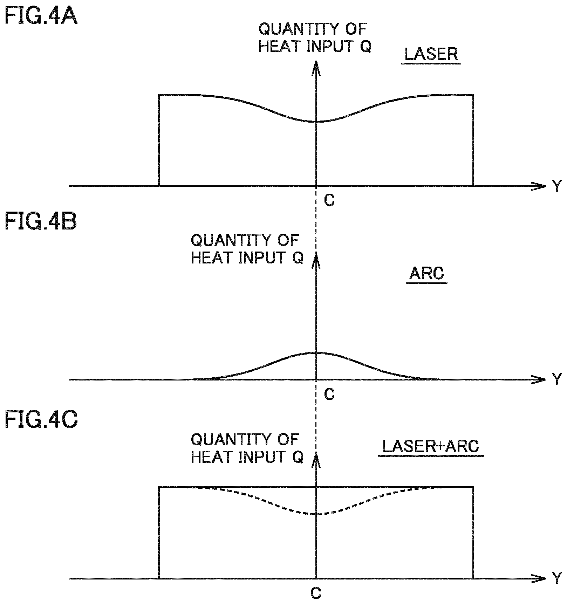

Figs. 4A to 4C each show a distribution of a quantity of heat input in a direction of width of welding. Fig. 4A shows a distribution of a quantity of heat input by laser and Fig. 4B shows a distribution of a quantity of heat input by arc. Fig. 4C shows a distribution of the sum of the quantity of heat input by laser and the quantity of heat input by arc. In other words, Fig. 4C shows a distribution of the total quantity of heat input by laser and arc. In each figure, the ordinate represents a quantity of heat input Q and the direction of the Y axis represents the direction of width of welding. Quantity of heat input Q represents a total quantity of heat input (J) from start to end of welding at each point in the width direction.

Referring to Figs. 4A to 4C, by irradiation with laser to form irradiated region 80 shown in Fig. 3, a distribution of the quantity of heat input by laser exhibits such a profile that the quantity of heat input at center C in the width direction is small and increases toward ends as shown in Fig. 4A. For a reference purpose, if a two-dimensional shape of a region irradiated with laser is circular, the quantity of heat input would be highly likely to be large at the center in the width direction and smaller toward an end in the width direction in spite of lowering in irradiation energy density in the center of the irradiated region and increase thereof in a peripheral portion.

A distribution of the quantity of heat input by arc exhibits such a profile that the quantity of heat input at center C in the width direction is large and smaller toward the end as shown in Fig. 4B. Therefore, the heat distribution of the sum of the quantity of heat input by laser and the quantity of heat input by arc is substantially uniform in the width direction as shown in Fig. 4C.

In other words, the profile of the quantity of heat input by laser is determined in consideration of the profile of the quantity of heat input by arc such that the profile of the heat distribution of the sum of the quantity of heat input by laser and the quantity of heat input by arc is substantially uniform in the width direction. Based on the profile of the quantity of heat input by laser, the shape of laser irradiated region 80 and the distribution of the irradiation energy density (the shape and the distribution of the irradiation energy density shown in Fig. 3) are determined and the configuration of DOE 41 that realizes such irradiated region 80 is determined.

Alternatively, DOE 41 may be configured to obtain the profile of the quantity of heat input by laser as shown in Fig. 4A, and output from welding torch 10 may be adjusted by means of welding power supply 30 (controller) such that the profile of the heat distribution of the sum of the quantity of heat input by laser and the quantity of heat input by arc is substantially uniform in the width direction.

Since mechanical characteristics of a welded portion are determined by the quantity of heat input to the welded portion and the heat distribution in each welding process, desired mechanical characteristics in the welded portion can be obtained by adjusting the sum of the quantity of heat input by laser and the quantity of heat input by arc as described above. By making the sum of the quantity of heat input by laser and the quantity of heat input by arc uniform in the width direction, a weld bead high in quality without concentration of a generated intermetallic compound in a part can be formed.

In particular in welding in dissimilar material joining (for example, welding between an aluminum alloy sheet and a hot-dip galvanized steel sheet), in controlling an amount of a generated intermetallic compound and a distribution thereof, an amount and a distribution of a molten metal should be controlled. In the present embodiment, by adjusting the profile of the quantity of heat input by laser by means of the adjustment mechanism as described above, melting mainly of a parent material can be adjusted and a width of a weld bead as well as a depth (a penetration depth) and a distribution of a molten weld pool can be adjusted. By adjusting output from welding torch 10 by means of welding power supply 30, melting mainly of a weld wire can be adjusted and an amount of a molten metal can be adjusted.

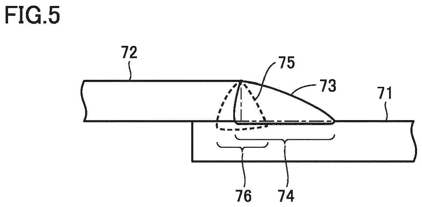

Fig. 5 is a diagram showing an exemplary cross-section of a joined portion in fillet welding of a lap joint. Referring to Fig. 5, in this example, welded materials 70 include a GI material 71 and an aluminum alloy sheet 72 layered on GI material 71. A weld bead 73 shown with a solid line is a weld bead in fillet welding with the use of laser-arc hybrid welding apparatus 1 according to the present first embodiment (which may simply be referred to as "welding apparatus 1" below). A weld bead 75 shown with a dotted line as a comparative example is a weld bead in fillet welding with the use of a laser-arc hybrid welding apparatus without DOE 41 (which is referred to as a "conventional welding apparatus" below).

When welding with the conventional welding apparatus is performed, a laser irradiated region is narrow (when the laser irradiated region is narrow, a width of arc is also narrow) and an irradiation energy density in a central portion of the irradiated region is high. Therefore, weld bead 75 large in penetration depth into a parent material and narrow in portion 76 of contact with the parent material (GI material 71) is formed.

In contrast, when welding with welding apparatus 1 is performed, the laser irradiated region is large (when the laser irradiated region is large, a width of arc is also large), the quantity of heat input in the central portion of the irradiated region is suppressed, and the quantity of heat input in the width direction is even. Therefore, weld bead 73 suppressed in penetration depth into a parent material and larger in portion 74 of contact with the parent material than portion 76 of contact is formed.

Thus, a rate of solidification in generation of weld bead 73 small in penetration depth into the parent material and large in portion of contact with the parent material is higher than a rate of solidification in generation of weld bead 75. Therefore, an amount of generated intermetallic compound in weld bead 75 is larger than an amount of generated intermetallic compound in weld bead 73. Portion 74 of contact between weld bead 73 and the parent material (GI material 71) is larger than portion 76 of contact between weld bead 75 and the parent material. As set forth above, joint strength achieved by weld bead 73 is higher than joint strength by weld bead 75.

As set forth above, according to the present first embodiment, DOE 41 capable of forming the laser irradiated region shown in Fig. 3 is provided so that the distribution in the width direction of the quantity of heat input exhibits the profile as shown in Figs. 4A to 4C. Therefore, a weld bead of a large width can be formed while the quantity of heat input to the joined portion is suppressed. Consequently, joint strength of the joined portion can be secured.

According to the present first embodiment, by adjusting the distribution (profile) in the width direction, of the sum of the quantity of heat input by laser and the quantity of heat input by arc, desired mechanical characteristics in the welded portion can be obtained. By making the distribution in the width direction of the sum of the quantity of heat input by laser and the quantity of heat input by arc uniform in the width direction, a weld bead high in quality without concentration of a generated intermetallic compound in a part can be formed.

By adjusting the profile of the quantity of heat input by laser by means of the adjustment mechanism (DOE 41) as above, melting of the parent material can be adjusted and the width of the weld bead as well as the depth (penetration depth) and the distribution of the molten weld pool can be adjusted. By adjusting output from welding torch 10 by means of welding power supply 30, melting of the weld wire can be adjusted.

### [Second Embodiment]

In the first embodiment, laser irradiated region 80 as shown with Fig. 3 is formed with the use of DOE 41. In this second embodiment, instead of the DOE, a laser scanning apparatus that can scan welded material 70 with laser emitted to welded material 70 is provided in the laser torch and the laser scanning apparatus scans the welded material with laser so that an irradiated region as in the first embodiment is formed.

The laser-arc hybrid welding apparatus in the second embodiment is identical in overall configuration to laser-arc hybrid welding apparatus 1 shown in Fig. 1.

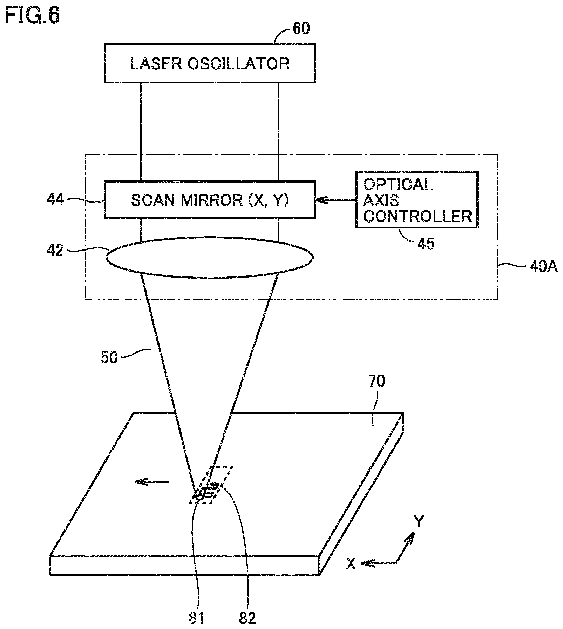

Fig. 6 is a diagram schematically showing a configuration of a laser torch in the second embodiment. Referring to Fig. 6, this laser torch 40A includes a scan mirror 44 and an optical axis controller 45 instead of DOE 41 in laser torch 40 shown in Fig. 2.

Scan mirror 44 and optical axis controller 45 correspond to the adjustment mechanism in the present disclosure, and implement the laser scanning apparatus that can scan welded material 70 with laser. Scan mirror 44 reflects laser beams received from laser oscillator 60 and outputs reflected laser beams to lens 42. Scan mirror 44 is variable in its orientation by means of optical axis controller 45 and can change a position 81 of irradiation with laser beams emitted through lens 42. Scan mirror 44 includes, for example, an X scan mirror that can change position 81 of irradiation in an X direction and a Y scan mirror that can change position 81 of irradiation in a Y direction.

Optical axis controller 45 includes a drive apparatus that changes an angle of scan mirror 44 and a controller that controls the drive apparatus to adjust position 81 of irradiation with laser beams (neither of which is shown). The drive apparatus is constituted, for example, of an X-axis motor that rotationally drives the X scan mirror and a Y-axis motor that rotationally drives the Y scan mirror.

According to such a configuration, by scanning welded material 70 with laser, a rectangular irradiated region 82 equivalent to irradiated region 80 shown in Fig. 3 can be formed on welded material 70. By adjusting as appropriate output of laser and/or a speed of scanning with laser together with a position of scanning with laser, a profile of an irradiation energy density in irradiated region 82 can be adjusted as shown with the dotted lines in Fig. 3.

As set forth above, according to this second embodiment as well, an effect as in the first embodiment is obtained. According to this second embodiment, irradiated region 82 having a shape and a distribution of an irradiation energy density as desired is formed by using scan mirror 44 and optical axis controller 45, and hence a degree of freedom in forming desired irradiated region 82 is high.

### [Modification]

In the first embodiment, laser irradiated region 80 as shown in Fig. 3 is formed with the use of DOE 41. Specifically, the two-dimensional shape of irradiated region 80 is rectangular and irradiated region 80 has such a distribution of the irradiation energy density that the irradiation energy density is higher from the center in the width direction toward an end in the width direction.

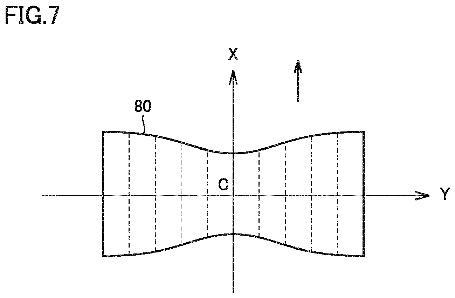

Irradiated region 80 formed by DOE 41, however, is not limited to the irradiated region with the shape and the distribution of the irradiation energy density as such. For example, as shown in Fig. 7, irradiated region 80 may have a length along the direction of progress of welding (the direction of the X axis) at center C in the width direction (the direction of the Y axis) shorter than a length at an end in the width direction and may have a substantially uniform irradiation energy density in the width direction.

With irradiated region 80 having the shape and the distribution of the irradiation energy density as such as well, the profile of the quantity of heat input by laser as shown in Fig. 4A is obtained. Therefore, an effect as in the first embodiment is obtained.

In the second embodiment as well, irradiated region 82 having the shape and the distribution of the irradiation energy density as shown in Fig. 7 may be formed with the use of laser torch 40A.

In each embodiment and the modification above, the profile of the quantity of heat input by laser is determined or output from welding torch 10 is adjusted by means of welding power supply 30 such that the profile of the sum of the quantity of heat input by laser and the quantity of heat input by arc is substantially uniform in the width direction. The profile in the width direction of the sum of the quantity of heat input by laser and the quantity of heat input by arc, however, is not limited as such. The profile of the sum of the quantity of heat input by laser and the quantity of heat input by arc may exhibit such a prescribed profile that the quantity of heat input in the central portion in the width direction is larger than the quantity of heat input at the end in the width direction to such an extent that the quantity of heat input in the central portion is not too large, or that the quantity of heat input in the central portion is smaller than the quantity of heat input at the end.

In each embodiment and the modification above, the profile of the quantity of heat input by laser is such that the quantity of heat input is small in the center in the width direction as shown in Fig. 4A. The quantity of heat input by laser, however, may substantially be uniform in the width direction. In this case, in the profile of the sum of the quantity of heat input by laser and the quantity of heat input by arc, the quantity of heat input in the central portion is larger than the quantity of heat input at the end, however, the quantity of heat input in the central portion can be suppressed and the distribution of the quantity of heat input can be enlarged in the width direction as compared with an example where the profile of the quantity of heat input by laser is not adjusted.

It should be understood that the embodiments disclosed herein are illustrative and non-restrictive in every respect. The scope of the present invention is defined by the terms of the appended claims and is intended to include any modifications within the scope and meaning equivalent to the terms of the appended claims.

## Claims

1. A laser-arc hybrid welding apparatus (1) that uses laser and arc, the laser-arc hybrid welding apparatus comprising:
a laser torch (40; 40A) that emits laser toward a joined portion; and
a welding torch (10) that generates arc between the welding torch and the joined portion,
the laser torch including an adjustment mechanism (41; 44, 45) that adjusts a shape of an irradiated region (80) irradiated with laser,
**characterized in that** the adjustment mechanism enlarges the irradiated region in a direction of width of welding as compared with irradiation without the adjustment mechanism in the laser torch and adjusting a shape of the irradiated region to allow a distribution in the direction of width, of a quantity of heat input by laser to exhibit a prescribed profile,
the prescribed profile being such a profile that the quantity of heat input in a central portion in the direction of width is equal to or smaller than the quantity of heat input at an end in the direction of width.

2. The laser-arc hybrid welding apparatus according to claim 1, wherein
the adjustment mechanism adjusts the shape of the irradiated region to a rectangular shape including opposing sides in parallel to a direction of movement of the laser torch.

3. The laser-arc hybrid welding apparatus according to claim 2, wherein
the adjustment mechanism further adjusts a distribution of a laser irradiation energy density in the irradiated region to set the irradiation energy density in the central portion in the direction of width to be lower than the irradiation energy density at the end in the direction of width.

4. The laser-arc hybrid welding apparatus according to claim 1, wherein
the adjustment mechanism adjusts the shape of the irradiated region to set a length of the irradiated region along a direction of movement of the laser torch in the central portion in the direction of width to be shorter than a length of the irradiated region along the direction of movement at the end in the direction of width.

5. The laser-arc hybrid welding apparatus according to any one of claims 1 to 4, wherein
a distribution in the direction of width, of a sum of the quantity of heat input by laser and a quantity of heat input by arc exhibits a prescribed heat distribution.

6. The laser-arc hybrid welding apparatus according to claim 5, further comprising a controller (30) that adjusts output from the welding torch, wherein
at least one of adjustment of the shape of the irradiated region by the adjustment mechanism and adjustment of the output from the welding torch by the controller is made to allow the distribution in the direction of width, of the sum of the quantity of heat input by laser and the quantity of heat input by arc to exhibit the prescribed heat distribution.

7. The laser-arc hybrid welding apparatus according to claim 5 or 6, wherein
the prescribed profile is such a profile that the quantity of heat input in the central portion in the direction of width is smaller than the quantity of heat input at the end in the direction of width, and
the prescribed heat distribution is uniform in the direction of width.

## Patentansprüche

1. Laser-Lichtbogen-Hybridschweißvorrichtung (1), die Laser und Lichtbogen verwendet, wobei die Laser-Lichtbogen-Hybridschweißvorrichtung Folgendes umfasst:
einen Laserbrenner (40; 40A), der einen Laser in Richtung eines verbundenen Abschnitts aussendet; und
einen Schweißbrenner (10), der einen Lichtbogen zwischen dem Schweißbrenner und dem verbundenen Abschnitt erzeugt,
wobei der Laserbrenner einen Einstellmechanismus (41; 44, 45) enthält, der die Form eines, mit Laser bestrahlten, bestrahlten Bereichs (80) einstellt,
**dadurch gekennzeichnet, dass** der Einstellmechanismus den bestrahlten Bereich in einer Breitenrichtung des Schweißens im Vergleich zur Bestrahlung ohne den Einstellmechanismus im Laserbrenner vergrößert und eine Form des bestrahlten Bereichs einstellt, um zu ermöglichen, dass eine Verteilung einer durch den Laser eingebrachten Wärmemenge in der Breitenrichtung ein vorgegebenes Profil aufweist,
wobei das vorgegebene Profil ein derartiges Profil ist, dass die eingebrachte Wärmemenge in einem mittleren Abschnitt in der Breitenrichtung gleich oder
kleiner ist als die eingebrachte Wärmemenge an einem Ende in der Breitenrichtung.

2. Laser-Lichtbogen-Hybridschweißvorrichtung nach Anspruch 1, wobei der Einstellmechanismus die Form des bestrahlten Bereichs auf eine rechteckige Form einstellt, die gegenüberliegende Seiten parallel zu einer Bewegungsrichtung des Laserbrenners enthält.

3. Laser-Lichtbogen-Hybridschweißvorrichtung nach Anspruch 2, wobei der Einstellmechanismus ferner eine Verteilung einer Laserbestrahlungsenergiedichte in dem bestrahlten Bereich einstellt, um die Bestrahlungsenergiedichte in dem mittleren Abschnitt in der Breitenrichtung niedriger als die Bestrahlungsenergiedichte am Ende in der Breitenrichtung einzustellen.

4. Laser-Lichtbogen-Hybridschweißvorrichtung nach Anspruch 1, wobei der Einstellmechanismus die Form des bestrahlten Bereichs so einstellt, dass eine Länge des bestrahlten Bereichs entlang einer Bewegungsrichtung des Laserbrenners im mittleren Abschnitt in der Breitenrichtung kürzer ist als eine Länge des bestrahlten Bereichs entlang der Bewegungsrichtung am Ende in der Breitenrichtung.

5. Laser-Lichtbogen-Hybridschweißvorrichtung nach einem der Ansprüche 1 bis 4, wobei
eine Verteilung einer Summe der durch den Laser eingebrachten Wärmemenge und einer durch den Lichtbogen eingebrachten Wärmemenge in der Breitenrichtung eine vorgegebene Wärmeverteilung aufweist.

6. Laser-Lichtbogen-Hybridschweißvorrichtung nach Anspruch 5, ferner umfassend eine Steuerung (30), die die Leistung des Schweißbrenners einstellt, wobei
mindestens eines der Einstellung der Form des bestrahlten Bereichs durch den Einstellmechanismus und/oder der Leistung von dem Schweißbrenner durch die Steuerung dazu gebracht wird, zu ermöglichen, dass die Verteilung der Summe der durch den Laser eingebrachten Wärmemenge und der durch den Lichtbogen eingebrachten Wärmemenge in der Breitenrichtung die vorgeschriebene Wärmeverteilung aufweist.

7. Laser-Lichtbogen-Hybridschweißvorrichtung nach Anspruch 5 oder 6, wobei
das vorgegebene Profil ein derartiges Profil ist, dass die eingebrachte Wärmemenge in dem mittleren Abschnitt in der Breitenrichtung kleiner ist als die eingebrachte Wärmemenge an dem Ende in der Breitenrichtung, und
die vorgeschriebene Wärmeverteilung in der Breitenrichtung gleichmäßig ist.

## Revendications

1. Appareil de soudage hybride au laser à l'arc (1) qui utilise un laser et un arc, l'appareil de soudage hybride au laser à l'arc comprenant :
une torche laser (40; 40A) qui émet un laser vers une partie jointe ; et
un chalumeau de soudage (10) qui génère un arc entre le chalumeau de soudage et la partie jointe,
la torche laser comportant un mécanisme de réglage (41; 44, 45) qui règle une forme d'une région irradiée (80) par laser,
**caractérisé en ce que** le mécanisme de réglage agrandit la région irradiée dans une direction de largeur de soudage en comparaison avec l'irradiation sans le mécanisme de réglage dans la torche laser et le réglage d'une forme de la région irradiée pour permettre une distribution dans la direction de largeur, d'une quantité de chaleur entrée par laser pour présenter un profil prescrit,
le profil prescrit étant un profil tel que la quantité de chaleur entrée dans une partie centrale dans la direction de largeur est égale ou inférieure à la quantité de chaleur entrée à une extrémité dans la direction de largeur.

2. Appareil de soudage hybride au laser à l'arc selon la revendication 1, dans lequel
le mécanisme de réglage règle la forme de la région irradiée à une forme rectangulaire comprenant des côtés opposés en parallèle à une direction de déplacement de la torche laser.

3. Appareil de soudage hybride au laser à l'arc selon la revendication 2, dans lequel
le mécanisme de réglage règle en outre une distribution d'une densité d'énergie d'irradiation laser dans la région irradiée pour régler la densité d'énergie d'irradiation dans la partie centrale dans la direction de largeur pour être inférieure à la densité d'énergie d'irradiation à l'extrémité dans la direction de largeur.

4. Appareil de soudage hybride au laser à l'arc selon la revendication 1, dans lequel
le mécanisme de réglage règle la forme de la région irradiée pour régler une longueur de la région irradiée le long d'une direction de déplacement de la torche laser dans la partie centrale dans la direction de largeur pour être plus courte qu'une longueur de la région irradiée le long de la direction de déplacement à l'extrémité dans la direction de la largeur.

5. Appareil de soudage hybride au laser à l'arc selon l'une quelconque des revendications 1 à 4, dans lequel
une distribution dans la direction de largeur, d'une somme de la quantité de chaleur entrée par laser et d'une quantité de chaleur entrée par arc présente une distribution de chaleur prescrite.

6. Appareil de soudage hybride au laser à l'arc selon la revendication 5, comprenant en outre un contrôleur (30) qui règle la sortie du chalumeau de soudage, dans lequel
au moins l'un d'un réglage de la forme de la région irradiée par le mécanisme de réglage et d'un réglage de la sortie du chalumeau de soudage par le contrôleur est effectué pour permettre la distribution dans la direction de largeur, de la somme de la quantité de chaleur entrée par laser et de la quantité de chaleur entrée par arc pour présenter la distribution de chaleur prescrite.

7. Appareil de soudage hybride au laser à l'arc selon la revendication 5 ou 6, dans lequel
le profil prescrit est un profil tel que la quantité de chaleur entrée dans la partie centrale dans la direction de largeur est inférieure à la quantité de chaleur entrée à l'extrémité dans la direction de largeur, et
la distribution de chaleur prescrite est uniforme dans la direction de largeur.
